# FASCICULE DE BREVET EUROPEEN

(11) **EP 3 002 267 B1**
(45) Date de publication et mention de la délivrance du brevet: **03.07.2019**
(21) Numéro de dépôt: 15290242.5
(22) Date de dépôt: 24.09.2015
(51) Int. Cl.: C04B 35/80, C04B 37/00, B29C 70/24

(54) **PROCÉDÉ POUR LA RÉALISATION D'UNE PIÈCE MONOLITHIQUE COMPOSITE THERMOSTRUCTURALE À DOUBLE PAROI ET PIÈCE OBTENUE**
VERFAHREN ZUR HERSTELLUNG EINES MONOLITHISCHEN TEILS AUS HOCHTEMPERATURBESTÄNDIGEM VERBUNDWERKSTOFF MIT DOPPELWAND, UND SO ERHALTENES TEIL
METHOD FOR PRODUCING A DOUBLE-WALLED COMPOSITE THERMOSTRUCTURAL MONOLITHIC PART AND RESULTING PART

(30) Priorité: 02.10.2014 FR 1402221
(43) Date de publication de la demande: 06.04.2016
(73) Titulaire: MBDA France, 92350 Le Plessis-Robinson (FR); ArianeGroup GmbH, 82024 Taufkirchen (DE)
(72) Inventeur: Bouchez, Marc, 18000 Bourges (FR); Beyer, Steffen, 81827 Munich (DE); Schmidt-Wimmer, Stephan, 85221 Dachau (DE)
(74) Mandataire: Gevers & Orès

(56) Documents cités:
- EP-A1- 1 342 552
- FR-A1- 2 988 777

## Description

La présente invention concerne un procédé de réalisation d'une pièce monolithique composite fibres/matrice thermostructurale comportant deux peaux de matériau composite espacées l'une de l'autre et reliées l'une à l'autre par une pluralité d'entretoises filiformes de matériau composite, ladite pièce étant capable de résister à des pressions internes et/ou externes élevées. Elle concerne également une pièce monolithique obtenue par la mise en oeuvre d'un tel procédé.

Une telle pièce composite monolithique, par exemple destinée à former des panneaux pouvant véhiculer un fluide, des supports de dispositifs optiques spatiaux ou des radômes réfractaires pour radars à haute résolution,..., est décrite dans le document FR-2 749 327. De même, une pièce composite monolithique à double paroi et entretoises filiformes est mentionnée dans le document FR-2 718 670.

Par ailleurs, par le document FR-2 836 690, on connaît un procédé permettant de réaliser une pièce monolithique thermostructurale, sans opérations supplémentaires d'imprégnation et de durcissement et sans pré-imprégnation du fil de piquage, tout en permettant un positionnement de précision de la structure fibreuse dans le moule d'imprégnation et une utilisation optimale des propriétés mécaniques des fibres constituant lesdites peaux. Pour ce faire, ce procédé pour la réalisation d'une pièce monolithique composite fibres/matrice thermostructurale comportant deux peaux de matériau composite espacées l'une de l'autre et reliées l'une à l'autre par une pluralité d'entretoises filiformes, est tel que :
a) on forme une structure sandwich souple comportant une âme souple intermédiaire, réalisée en un matériau apte à être pénétré par une aiguille et imperméable à la résine devant engendrer ladite matrice, et deux armatures fibreuses souples externes, respectivement disposées sur des faces externes opposées de ladite âme souple ;
b) on assemble par piquage lesdites armatures fibreuses et ladite âme de cette structure sandwich, au moyen d'un fil formant des points de piqûre qui comportent des tronçons de fil traversant lesdites armatures fibreuses et ladite âme, ledit fil de piquage étant constitué par une mèche comportant une pluralité de filaments non liés entre eux, après cette opération de piquage lesdits tronçons de fil traversant lesdites armatures fibreuses et ladite âme présentant, dans cette dernière, des canaux longitudinaux ménagés entre lesdits filaments et s'étendant de l'une desdites armatures fibreuses à l'autre ;
c) on imprègne ladite structure sandwich par ladite résine à l'état visqueux, ladite opération d'imprégnation étant réalisée de façon que ladite résine durcissable soit amenée à pénétrer dans lesdits canaux longitudinaux desdits tronçons de fil traversants pour former, à l'emplacement de chacun de ceux-ci, un pont de résine en contact par ses extrémités opposées avec la résine imprégnant lesdites armatures fibreuses souples ; et
d) on procède au durcissement de ladite résine imprégnant cette structure sandwich.

Grâce à ce procédé usuel, les tronçons de fil traversants sont imprégnés de résine, lors de l'imprégnation des armatures fibreuses desdites peaux et, de même, ils sont durcis pendant le durcissement desdites armatures fibreuses, préalablement à l'élimination de ladite âme, de sorte qu'ils deviennent des entretoises filiformes de matière composite disposées entre lesdites peaux composites.

La présente invention a pour objet de perfectionner un tel procédé de réalisation d'une pièce monolithique composite fibres/matrice thermostructurale comportant deux peaux de matériau composite espacées l'une de l'autre et reliées l'une à l'autre par une pluralité d'entretoises filiformes de matériau composite.

A cet effet, selon l'invention, ledit procédé selon lequel au moins :
A/ on fabrique une préforme fibreuse pourvue d'une structure sandwich comportant une âme souple intermédiaire et deux armatures fibreuses externes, respectivement disposées sur des faces externes opposées de ladite âme souple et assemblées par des tronçons de fil traversant lesdites armatures fibreuses, ladite préforme étant imprégnée de résine ;
B/ on durcit ladite préforme et on élimine ladite âme ; et
C/ on réalise une densification de la structure ainsi obtenue,
   est remarquable en ce qu'à l'étape C/, on réalise une densification de ladite structure avec infiltration par voie liquide.

Grâce à cette infiltration par voie liquide de type LSI (« Liquid Silicon Infiltration » en anglais), qui permet au silicium utilisé de pénétrer dans le coeur de la préforme, on obtient une densification que l'on est en mesure de bien maîtriser.

De plus, cette densification par voie liquide présente d'autres avantages, notamment en termes de coût et de performance.

Selon l'invention, à l'étape B/, on réalise une pré-densification avec une infiltration par voie gazeuse de type CVI (« Chemical Vapor Infiltration » en anglais) de manière à générer une pré-densification de ladite préforme et ainsi desdits tronçons de fil traversants destinés à former lesdites entretoises de manière à obtenir un matériau carbone-carbone (C-C). On utilise, de préférence, une infiltration rapide de type r-CVI (pour « rapid Chemical Vapor Infiltration » en anglais) qui présente des avantages en termes de coût, de durée de mise en oeuvre, et de performance.

Grâce à cette pré-densification, lesdits tronçons de fil traversants sont pourvus d'une couche de carbone, ce qui permet de les protéger lors de la densification par voie liquide à l'étape C/. Par conséquent, ce mode de réalisation préféré repose sur la coopération des étapes de pré-densification et de densification (permettant d'obtenir un matériau C-C/SiC), la pré-densification permettant de mettre en oeuvre la densification sans endommager les tronçons de fil destinés à former les entretoises qui participent à la rigidification de la pièce monolithique composite, et la densification présente les avantages précités.

De plus, dans ce mode de réalisation préféré, dans une étape intermédiaire entre lesdites étapes B/ et C/, on réalise un usinage de la préforme pré-densifiée à l'étape B/. Cet usinage est possible sur la préforme pré-densifiée (C-C), telle que précisée ci-dessous, mais serait très difficile à réaliser sur le matériau final (C-C/SiC) après densification.

De préférence, cette étape intermédiaire est une étape d'usinage mécanique de faible épaisseur qui sert à préparer la structure pour la densification par voie liquide et à lui conférer la géométrie finale souhaitée.

De plus, avantageusement, à cette étape intermédiaire, on usine des filetages et/ou des perçages. Dans ce cas, de façon avantageuse, on met en place des bouchons dans lesdits filetages et lesdits perçages au moins pendant l'étape C/ de densification pour éviter qu'ils soient obstrués.

Dans un mode de réalisation préféré, à l'étape C/, pour réaliser la densification par voie liquide, on introduit le silicium sous forme de pâte liquide qui diffuse sous l'effet de la température et la pression dans un four de densification.

Par ailleurs, avantageusement, à l'étape A/, on fabrique une préforme fibreuse présentant une épaisseur variable, et munie par exemple de raidisseurs.

En outre, dans un mode de réalisation préféré, à l'étape A/, on réalise la suite d'opérations suivantes, telles que présentées notamment dans le document FR-2 836 690 :
a) on forme une structure sandwich souple comportant une âme souple intermédiaire, réalisée en un matériau apte à être pénétré par une aiguille et imperméable à la résine devant engendrer la matrice, et deux armatures fibreuses souples externes, respectivement disposées sur des faces externes opposées de ladite âme souple ;
b) on assemble par piquage lesdites armatures fibreuses et ladite âme de cette structure sandwich, au moyen d'un fil formant des points de piqûre qui comportent des tronçons de fil traversant lesdites armatures fibreuses et ladite âme, ledit fil de piquage étant constitué par une mèche comportant une pluralité de filaments non liés entre eux. Après cette opération de piquage, lesdits tronçons de fil traversant lesdites armatures fibreuses et ladite âme présentent, dans cette dernière, des canaux longitudinaux ménagés entre lesdits filaments et s'étendant de l'une desdites armatures fibreuses à l'autre ; et
c) on imprègne ladite structure sandwich par ladite résine, ladite opération d'imprégnation étant réalisée de façon que ladite résine durcissable soit amenée à pénétrer dans lesdits canaux longitudinaux desdits tronçons de fil traversants pour former, à l'emplacement de chacun de ceux-ci, un pont de résine en contact par ses extrémités opposées avec la résine imprégnant lesdites armatures fibreuses.

La présente invention concerne également une pièce monolithique composite fibres/matrice comportant deux peaux de matériau composite espacées l'une de l'autre et reliées l'une à l'autre par une pluralité d'entretoises filiformes de matériau composite, qui est obtenue par la mise en oeuvre du procédé précité.

Dans un mode de réalisation particulier, au moins un revêtement (par exemple dans le but de réaliser une imperméabilisation) est appliquée extérieurement sur au moins l'une desdites peaux.

La présente invention peut notamment être appliquée à de nombreux domaines nécessitant une telle pièce monolithique composite capable de résister à des températures et/ou des pressions internes et/ou externes très élevées.
Les figures du dessin annexé feront bien comprendre comment l'invention peut être réalisée. Sur ces figures, des références identiques désignent des éléments semblables.
La figure 1 illustre schématiquement et partiellement une préforme fabriquée et utilisée lors de la mise en oeuvre de la présente invention.
La figure 2 illustre schématiquement et partiellement une pièce composite obtenue à partir de la préforme de la figure 1.
La figure 3 est une vue en perspective d'une pièce monolithique réalisée sous forme de panneau et pourvue de bouchons pour une étape d'infiltration par voie liquide.

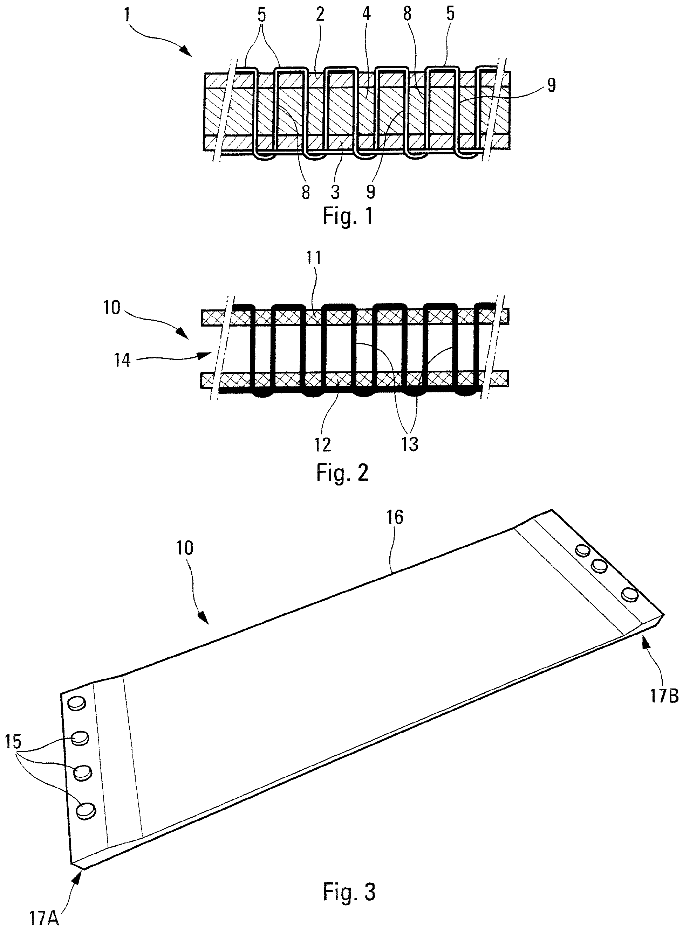

La présente invention concerne un procédé de fabrication d'une pièce monolithique composite fibres/matrice thermostructurale 10 comportant deux peaux de matériau composite 11 et 12 espacées l'une de l'autre et reliées l'une à l'autre par une pluralité d'entretoises filiformes 13 de matériau composite. Une telle pièce composite monolithique 10, qui est par exemple destinée à former des protections thermiques et qui est représentée partiellement et schématiquement sur la figure 2, doit être capable de résister à des pressions internes et/ou externes très élevées.

Ledit procédé de fabrication est du type selon lequel :
A/ on fabrique, de façon usuelle, une préforme fibreuse 1 pourvue d'une structure sandwich comportant une âme souple intermédiaire 4 et deux armatures fibreuses externes 2 et 3. Ces armatures fibreuses 2 et 3 sont disposées respectivement sur des faces externes opposées de ladite âme souple 4 et sont assemblées par des tronçons de fil 8 et 9 traversant lesdites armatures fibreuses 2 et 3, comme représenté sur la figure 1 et précisé ci-dessous, cette préforme 1 étant imprégnée de résine ;
B/ on durcit ladite préforme 1 et on élimine ladite âme 4 ; et
C/ on réalise une densification de la structure ainsi obtenue.

Selon l'invention, à l'étape C/, on réalise une densification de la structure avec infiltration par voie liquide de manière à mettre en place une couche profonde de SiC.

Grâce à une telle infiltration par voie liquide de type LSI (« Liquid Silicon Infiltration » en anglais), précisée ci-dessous, qui permet notamment au silicium utilisé de pénétrer dans le coeur de la préforme, on réalise une densification que l'on est en mesure de bien maîtriser.

De plus, cette densification par voie liquide présente d'autres avantages, et notamment :
- un coût réduit ; et
- des performances accrues.

Selon l'invention, on réalise, à l'étape B/, une pré-densification avec une infiltration par voie gazeuse de type CVI (« Chemical Vapor Infiltration » en anglais) de manière à générer une pré-densification de ladite préforme 1 et donc également desdits tronçons de fil 8 et 9 traversants (destinés à former lesdites entretoises 13). Cette pré-densification permet d'obtenir une structure carbone-carbone (C-C). On utilise, de préférence, une infiltration rapide de type r-CVI (pour « rapid Chemical Vapor Infiltration » en anglais) qui présente des avantages en termes de coût, de durée de mise en oeuvre, et de performance.

Grâce à cette pré-densification, lesdits tronçons de fil 8 et 9 traversants sont pourvus d'une couche de carbone, ce qui permet notamment de les protéger lors de la densification par voie liquide mise en oeuvre à l'étape C/.

Par conséquent, ce mode de réalisation préféré repose sur la coopération de l'étape de pré-densification (étape B/) et de l'étape densification (étape C/) permettant de créer une structure de type C-C/SiC. En effet, la pré-densification permet de mettre en oeuvre la densification sans endommager les tronçons de fil 8 et 9 destinés à former les entretoises 13 (qui participent à la rigidification de la pièce monolithique composite 10), et la densification présente les avantages précités et permet de former une structure céramique.

Dans un mode de réalisation préféré, pour la mise en oeuvre de l'étape A/, on réalise les opérations suivantes telles que présentées notamment dans le document FR-2 836 690 :
a) on forme une structure sandwich souple 1 comportant une âme souple intermédiaire 4 réalisée en un matériau qui est, d'une part, apte à être pénétré par une aiguille et qui est, d'autre part, imperméable à la résine devant engendrer la matrice. Cette structure sandwich souple 1 comporte également deux armatures fibreuses souples externes 2, 3, respectivement disposées sur des faces externes opposées de ladite âme souple 4 ;
b) on assemble par piquage lesdites armatures fibreuses 2, 3 et ladite âme 4 de cette structure sandwich 1, au moyen d'un fil 5 formant des points de piqûre qui comportent des tronçons de fil 8, 9 traversant lesdites armatures fibreuses 2, 3 et ladite âme 4, comme représenté sur la figure 1. Ce fil de piquage 5 est constitué par une mèche comportant une pluralité de filaments non liés entre eux. Après cette opération de piquage, les tronçons de fil 8, 9 traversant les armatures fibreuses 2, 3 et l'âme 4 présentent, dans cette dernière, des canaux longitudinaux ménagés entre lesdits filaments et s'étendant de l'une des armatures fibreuses à l'autre ; et
c) on imprègne ladite structure sandwich 1 par une résine. Cette opération d'imprégnation est réalisée de façon que la résine durcissable soit amenée à pénétrer dans les canaux longitudinaux desdits tronçons de fil traversants 8, 9 pour former, à l'emplacement de chacun de ceux-ci, un pont de résine en contact par ses extrémités opposées avec la résine imprégnant les armatures fibreuses souples 2, 3.

On notera que :
- l'âme souple 4, qui est représentée sous la forme d'une plaque, peut en réalité présenter toute forme comportant deux faces opposées, comme par exemple une forme cylindrique, conique ou prismatique. Elle est réalisée en une matière apte à être pénétrée par une aiguille, telle que par exemple une mousse d'un polyuréthane, d'un polypropylène ou, de préférence, d'un polystyrène. De plus, cette matière est imperméable à la résine qui est utilisée pour l'imprégnation des armatures fibreuses souples 2 et 3 ; et
- chacune des armatures fibreuses souples 2 et 3 présente une structure fibreuse, qui peut être réalisée de toute manière connue. Lesdites armatures 2 et 3 se présentent chacune sous la forme d'une couche réalisée à base de fibres de carbone ou de toute autre matière apte à former des fibres à haute résistance. De plus, ces armatures 2 et 3 peuvent présenter des épaisseurs et des formes différentes et variées.

Comme cela est représenté sur la figure 1, il est avantageux que les armatures 2 et 3 soient parallèles l'une à l'autre et que les tronçons de fil traversants 8 et 9 soient orthogonaux auxdites armatures. A des fins de clarté, sur les figures 1 et 2, les deux tronçons de fil de chaque point de piquage sont représentés très espacés l'un de l'autre, mais il va de soi que, en réalité, ils sont très proches l'un de l'autre.

On remarquera que la structure sandwich 1 assemblée par les fils 5 et 6 est souple et peut éventuellement subir des modifications de forme. Aussi, on réalise, de préférence, un contrôle des dimensions de la structure 1 à ce stade du procédé.

Après piquage, la structure sandwich 1 est imprégnée par la résine durcissable. L'imprégnation est réalisée de préférence sous dépression, de façon que ladite résine pénètre, non seulement dans les armatures fibreuses 2 et 3, mais encore dans les canaux longitudinaux du fil 5.

Au cours de cette opération d'imprégnation, l'âme 4 n'est pas imprégnée puisqu'imperméable à la résine. La résine imprégnée est ensuite durcie, par exemple par élévation de température avec éventuelle mise sous pression (quelques bars).

Selon l'invention, pour former la matrice carbone C-C de la structure sandwich 1, on soumet cette dernière comme indiqué ci-dessus, à une pré-densification (l'étape B/ précitée) avec une infiltration par voie gazeuse, ce qui permet également d'éliminer l'âme 4.

La structure ainsi obtenue est ensuite soumise à d'autres opérations précisées ci-après, puis elle est densifiée à l'étape C/ dans le but d'obtenir une matrice de type céramique.

On obtient finalement la pièce monolithique composite 10 de la figure 2 comportant deux peaux 11 et 12 de matériau composite (issues des armatures souples 2 et 3) espacées l'une de l'autre et reliées l'une à l'autre par une pluralité d'entretoises filiformes 13 de matériau composite (issues des tronçons de fil traversants 8 et 9), orthogonales auxdites peaux 11 et 12. L'espace 14 entre les deux peaux 11 et 12 est destiné, dans une application préférée, à la circulation d'un fluide de refroidissement de manière à notamment permettre à la pièce monolithique composite 10 de supporter des températures élevées. Les deux peaux 11 et 12 formant l'espace 14 sont maintenues à distance par les entretoises filiformes 13 qui, dans une telle application, assurent à la fois la géométrie de la structure et la tenue à la pression du fluide refroidisseur et intensifient les échanges thermiques convectifs.

De plus, dans un mode de réalisation préféré, dans une étape intermédiaire entre lesdites étapes B/ et C/ précitées, on effectue un contrôle non destructif de la préforme pré-densifiée à l'étape B/.

Puis, on réalise un usinage de cette préforme pré-densifiée. Cet usinage peut être réalisé sur la préforme pré-densifiée (C-C) avec des moyens usuels, et serait très difficile sur le matériau final (C-C/SiC) qui devient très dur après densification.

De préférence, cette étape d'usinage est une étape d'usinage mécanique de faible épaisseur qui sert à préparer la structure pour la densification par voie liquide et à lui donner la géométrie finale souhaitée.

De plus, à cette étape intermédiaire, on usine des perçages et/ou des filetages si la pièce 10 doit en comporter, par exemple pour la mise en place d'une alimentation en fluide de refroidissement sur la pièce 10. Cette opération d'usinage peut être réalisée avec une assistance par ultrasons par exemple.

Puis, on agence des bouchons 15 dans lesdits filetages et lesdits perçages, comme représenté pour la pièce 10 de la figure 3 qui est réalisée sous forme d'une plaque 16, dans laquelle des filetages sont prévus dans des épaulements. Ces bouchons 15 sont utilisés au moins pendant l'étape C/ de densification, pour éviter que les filetages et les perçages soient obstrués (de manière à en disposer dans la pièce finale).

Dans un mode de réalisation préféré, à l'étape C/, pour réaliser la densification par voie liquide, on introduit le silicium sous forme de pâte liquide (« slurry » en anglais), qui diffuse sous l'effet de la température et la pression dans un four de densification, dans la pièce par capillarité et par transport gazeux sur les parois non initialement recouvertes de pâte. Un traitement thermique approprié permet de réaliser le siliconage. Dans un mode de réalisation préféré, on utilise la méthode décrite dans le document WO-2008/106932 pour mettre en oeuvre cette densification.

A ce stade du procédé, on réalise généralement un contrôle (non destructif) des dimensions de la pièce 10.

On notera qu'avec le procédé conforme à l'invention, on peut réaliser une pièce 10 présentant une épaisseur variable, comme illustré par exemple par les bords 17A et 17B du panneau 16 de la figure 3. Pour ce faire, on fabrique à l'étape A/ une préforme fibreuse 1 qui présente une forme et des dimensions appropriées, et qui peut par exemple être munie de raidisseurs.

Par ailleurs, il est également possible de recouvrir la face externe d'au moins l'une desdites peaux 11 ou 12 de la pièce 10 d'au moins un revêtement, par exemple au moyen d'un produit d'étanchéité usuel pour réaliser une imperméabilisation.

## Revendications

1. Procédé pour la réalisation d'une pièce monolithique composite fibres/matrice thermostructurale (10) comportant deux peaux de matériau composite (11, 12) espacées l'une de l'autre et reliées l'une à l'autre par une pluralité d'entretoises filiformes de matériau composite (13), procédé selon lequel au moins :
A/ on fabrique une préforme fibreuse (1) pourvue d'une structure sandwich comportant une âme souple intermédiaire (4) et deux armatures fibreuses externes (2, 3), respectivement disposées sur des faces externes opposées de ladite âme souple (4) et assemblées par des tronçons de fil (8, 9) traversant lesdites armatures fibreuses (2, 3), cette préforme (1) étant imprégnée de résine ;
B/ on durcit ladite préforme et on élimine ladite âme (4) ; et
C/ on réalise une densification de la structure ainsi obtenue,
**caractérisé en ce qu'**à l'étape B/, on réalise une pré-densification avec une infiltration par voie gazeuse de manière à générer une pré-densification de ladite préforme (1) et ainsi desdits tronçons de fil (8, 9) traversants destinés à former lesdites entretoises (13), lesdits tronçons de fil (8, 9) traversants étant pourvus d'une couche de carbone grâce à cette pré-densification, et **en ce qu'**à l'étape C/, on réalise une densification de ladite structure avec infiltration par voie liquide.

2. Procédé selon la revendication 1,
**caractérisé en ce qu'**à une étape intermédiaire entre lesdites étapes B/ et C/, on réalise un usinage de la préforme pré-densifiée à l'étape B/.

3. Procédé selon la revendication 2,
**caractérisé en ce qu'**à ladite étape intermédiaire, on usine des filetages et/ou des perçages.

4. Procédé selon la revendication 3,
**caractérisé en ce qu'**au moins pendant l'étape C/ de densification, on agence des bouchons (15) dans lesdits filetages et lesdits perçages.

5. Procédé selon l'une quelconque des revendications précédentes, **caractérisé en ce qu'**à l'étape C/, pour réaliser la densification par voie liquide, on introduit du silicium sous forme de pâte liquide qui diffuse sous l'effet de la température et de la pression dans un four de densification.

6. Procédé selon l'une quelconque des revendications précédentes, **caractérisé en ce qu'**à l'étape A/, on fabrique une préforme fibreuse présentant une épaisseur variable.

7. Procédé selon l'une quelconque des revendications précédentes, **caractérisé en ce qu'**à l'étape A/ :
a) on forme une structure sandwich souple (1) comportant une âme souple intermédiaire (4), réalisée en un matériau apte à être pénétré par une aiguille et imperméable à la résine devant engendrer la matrice, et deux armatures fibreuses souples externes (2, 3), respectivement disposées sur des faces externes opposées de ladite âme souple (4) ;
b) on assemble par piquage lesdites armatures fibreuses (2, 3) et ladite âme (4) de cette structure sandwich (1), au moyen d'un fil (5) formant des points de piqûre qui comportent des tronçons de fil (8, 9) traversant lesdites armatures fibreuses (2, 3) et ladite âme (4), ledit fil de piquage (5) étant constitué par une mèche comportant une pluralité de filaments non liés entre eux, après cette opération de piquage lesdits tronçons de fil (8, 9) traversant lesdites armatures fibreuses (2, 3) et ladite âme (4) présentant, dans cette dernière, des canaux longitudinaux ménagés entre lesdits filaments et s'étendant de l'une desdites armatures fibreuses à l'autre ; et
c) on imprègne ladite structure sandwich (1) par ladite résine, ladite opération d'imprégnation étant réalisée de façon que ladite résine durcissable soit amenée à pénétrer dans lesdits canaux longitudinaux desdits tronçons de fil (8, 9) traversants pour former, à l'emplacement de chacun de ceux-ci, un pont de résine en contact par ses extrémités opposées avec la résine imprégnant lesdites armatures fibreuses souples (2, 3).

8. Pièce monolithique composite fibres/matrice (10) comportant deux peaux de matériau composite (11, 12) espacées l'une de l'autre et reliées l'une à l'autre par une pluralité d'entretoises filiformes de matériau composite (13), obtenue par la mise en oeuvre du procédé selon l'une quelconque des revendications 1 à 7.

9. Pièce monolithique selon la revendication 8,
**caractérisée en ce qu'**au moins un revêtement est appliqué extérieurement sur au moins l'une desdites peaux (11, 12).

## Patentansprüche

1. Verfahren zur Herstellung eines monolithischen Teils aus hochtemperaturbeständigem Faser-/Matrixverbundwerkstoff (10), zwei Verbundmaterialschichten (11, 12) beinhaltend, die voneinander beabstandet sind und durch eine Vielzahl von fadenförmigen Abstandhaltern aus Verbundmaterial (13) miteinander verbunden sind, Verfahren, bei dem man mindestens:
A/ einen faserigen Vorformling (1) produziert, der mit einer Sandwich-Struktur versehen ist, die einen flexiblen mittleren Kern (4) und zwei faserige äußere Armaturen (2, 3) beinhaltet, die jeweils an entgegengesetzten Außenseiten des flexiblen Kerns (4) angeordnet sind und durch Fadenabschnitte (8, 9) zusammengesetzt sind, die die faserigen Armaturen (2, 3) durchqueren, wobei dieser Vorformling (1) mit Harz imprägniert ist;
B/ den Vorformling härtet und den Kern (4) eliminiert; und
C/ man eine Verdichtung der so erhaltenen Struktur realisiert,
**dadurch gekennzeichnet, dass** man in Schritt B/ eine Vorverdichtung mit einer Infiltration über eine Gasphase realisiert, um eine Vorverdichtung des Vorformlings (1), und somit der durchquerenden Fadenabschnitte (8, 9), die dazu bestimmt sind, die Abstandhalter (13) zu bilden, zu erzeugen, wobei die durchquerenden Fadenabschnitte (8, 9) dank dieser Vorverdichtung mit einer Kohlenstoffschicht versehen sind, und dadurch, dass man in Schritt C/ eine Verdichtung der Struktur mit Infiltration über eine Flüssigkeitsphase realisiert.

2. Verfahren nach Anspruch 1,
**dadurch gekennzeichnet, dass** man in einem Zwischenschritt zwischen den Schritten B/ und C/ eine Bearbeitung des in Schritt B/ vorverdichteten Vorformlings realisiert.

3. Verfahren nach Anspruch 2,
**dadurch gekennzeichnet, dass** man in dem Zwischenschritt Gewinde und/ oder Bohrungen bearbeitet.

4. Verfahren nach Anspruch 3,
**dadurch gekennzeichnet, dass** man mindestens während des Schritts C/ des Verdichtens Stopfen (15) in den Gewinden und den Bohrungen anordnet.

5. Verfahren nach einem der vorstehenden Ansprüche, **dadurch gekennzeichnet, dass** man in dem Schritt C/ zum Realisieren der Verdichtung über eine Flüssigkeitsphase Silicium in Form einer flüssigen Paste einführt, die unter der Wirkung der Temperatur und des Drucks in einem Verdichtungsofen diffundiert.

6. Verfahren nach einem der vorstehenden Ansprüche,
**dadurch gekennzeichnet, dass** man in dem Schritt A/ einen faserigen Vorformling produziert, der eine variable Dicke aufweist.

7. Verfahren nach einem der vorstehenden Ansprüche,
**dadurch gekennzeichnet, dass** man in dem Schritt A/:
a) eine flexible Sandwich-Struktur (1) bildet, die einen flexiblen mittleren Kern (4) beinhaltet, der aus einem Material realisiert ist, das imstande ist, durch eine Nadel durchdrungen zu werden, und dicht gegenüber dem Harz, das die Matrix erzeugen soll, und zwei faserige äußere Armaturen (2, 3), die jeweils an entgegengesetzten Außenseiten des flexiblen Kerns (4) angeordnet sind;
b) durch Heften die faserigen Armaturen (2, 3) und den Kern (4) dieser Sandwich-Struktur (1) anhand eines Fadens (5) zusammensetzt, der Einstichstellen bildet, die Fadenabschnitte (8, 9) beinhalten, die die faserigen Armaturen (2, 3) und den Kern (4) durchqueren, wobei der Heftfaden (5) durch eine Strähne gebildet wird, die eine Vielzahl von Filamenten beinhaltet, die nicht miteinander verbunden sind, nach diesem Heftvorgang die Fadenabschnitte (8, 9), die die faserigen Armaturen (2, 3) und den Kern (4) durchqueren, in diesem Letzteren Längskanäle aufweisen, die zwischen den Filamenten eingearbeitet sind und sich von einer der faserigen Armaturen zu der anderen erstrecken; und
c) die Sandwich-Struktur (1) durch das Harz imprägniert, wobei der Imprägnierungsvorgang derart realisiert wird, dass das aushärtbare Harz dazu gebracht wird, in die Längskanäle der durchquerenden Fadenabschnitte (8, 9) einzudringen, um an der Stelle jedes derselben eine Harzbrücke zu bilden, die an ihren entgegengesetzten Enden mit dem Harz in Kontakt stehen, das die flexiblen faserigen Armaturen (2, 3) imprägniert.

8. Monolithisches Teil aus Faser-/Matrixverbundwerkstoff (10), zwei Verbundmaterialschichten (11, 12) beinhaltend, die voneinander beabstandet sind, und durch eine Vielzahl von fadenförmigen Abstandhaltern aus Verbundmaterial (13) miteinander verbunden sind, das durch das Umsetzen des Verfahrens nach einem der Ansprüche 1 bis 7 erhalten wird.

9. Monolithisches Teil nach Anspruch 8,
**dadurch gekennzeichnet, dass** mindestens eine Beschichtung außen auf mindestens eine der Schichten (11, 12) aufgebracht wird.

## Claims

1. Method for producing a thermostructural monolithic fibres/matrix composite part (10), comprising two skins (11, 12) of composite material which are spaced apart from one another and interconnected by a plurality of thread-like spacers (13) of composite material, said method comprising at least:
A/ producing a fibrous preform (1) provided with a sandwich structure comprising an intermediate flexible core (4) and two outer fibrous frames (2, 3) arranged on opposed outer faces of said flexible core (4) and joined by thread portions (8, 9) that pass through said fibrous frames (2, 3), said preform (1) being impregnated with resin;
B/ curing said preform and removing said core (4); and
C/ densifying the resulting structure,
**characterised in that**, in step B/, pre-densification is carried out by gas-phase infiltration so as to pre-densify said preform (1) and thus said thread through-portions (8, 9) intended for forming said spacers (13), said thread through-portions (8, 9) being provided with a carbon layer by means of this pre-densification, and **in that**, in step C/, said structure is densified by liquid-phase infiltration.

2. Method according to claim 1,
**characterised in that**, in an intermediate step between steps B/ and C/, the preform that was pre-densified in step B/ is machined.

3. Method according to claim 2,
**characterised in that**, in said intermediate step, threaded holes and/or bores are machined.

4. Method according to claim 3,
**characterised in that**, at least during the densification step, step C/, plugs (15) are arranged in said threaded holes and said bores.

5. Method according to any of the preceding claims,
**characterised in that**, in step C/, in order to achieve liquid-phase densification, silicon is introduced in liquid paste form and spreads out under the effect of heat and pressure in a densification furnace.

6. Method according to any of the preceding claims, **characterised in that**, in step A/, a fibrous preform having variable thickness is produced.

7. Method according to any of the preceding claims,
**characterised in that**, in step A/:
a) a flexible sandwich structure (1) is formed that comprises an intermediate flexible core (4), which is made of a material that is capable of being penetrated by a needle and is impervious to the resin having to create the matrix, and two outer flexible fibrous frames (2, 3) arranged on opposed outer faces of said flexible core (4);
b) said fibrous frames (2, 3) and said core (4) of said sandwich structure (1) are joined by stitching by means of a thread (5) forming stitches that include thread portions (8, 9) that pass through said fibrous frames (2, 3) and said core (4), said stitching thread (5) consisting of a roving comprising a plurality of filaments that are not linked together, said thread portions (8, 9) that pass through said fibrous frames (2, 3) and said core (4) having, following said stitching operation, longitudinal channels in said core that are provided between said filaments and extend from one of said fibrous frames to the other; and
c) said sandwich structure (1) is impregnated with said resin, said impregnation operation being carried out such that said curable resin is made to penetrate said longitudinal channels of said thread through-portions (8, 9) in order to form, at the location of each of said portions, a resin bridge, of which the opposed ends are in contact with the resin impregnating said flexible fibrous frames (2, 3).

8. Monolithic fibres/matrix composite part (10) which comprises two skins (11, 12) of composite material which are spaced apart from one another and interconnected by a plurality of thread-like spacers (13) of composite material, and is produced by carrying out the method according to any of claims 1 to 7.

9. Monolithic part according to claim 8,
**characterised in that** at least one coating is applied on the outside of at least one of said skins (11, 12).
